# EUROPEAN PATENT APPLICATION

(11) **EP 3 599 080 A1**
(43) Date of publication of application: **29.01.2020**
(21) Application number: 18186173.3
(22) Date of filing: 27.07.2018
(51) Int. Cl.: B29C 64/153, B29C 64/393, B22F 3/105, B33Y 30/00, B33Y 50/02, B33Y 40/00

(54) **APPARATUS FOR ADDITIVELY MANUFACTURING THREE-DIMENSIONAL OBJECTS**

(71) Applicant: Concept Laser GmbH, 96215 Lichtenfels (DE)
(72) Inventor: Schumann, Philipp, 96274 Itzgrund - Schottenstein (DE); Pickl, Wolfgang, 96215 Lichtenfels (DE)
(74) Representative: Hafner & Kohl Patent- und Rechtsanwälte Partnerschaft mbB

(57) **Abstract**

Apparatus (1) for additively manufacturing three-dimensional objects (2) by means of successive layerwise selective irradiation and consolidation of layers of a build material (3) which can be consolidated by means of an energy source (4), wherein a determination device (7) is provided that comprises a first determination unit (8) and a second determination unit (9), wherein the first determination unit (8) is adapted to determine at least one first parameter of the object (2) during an additive manufacturing process and wherein the second determination unit (9) is adapted to determine at least one second parameter of the object (2) after the additive manufacturing process is finished, wherein the determination device (7) is adapted to compare the at least one first parameter and the at least one second parameter.

## Description

The invention relates to an apparatus for additively manufacturing three-dimensional objects by means of successive layerwise selective irradiation and consolidation of layers of a build material which can be consolidated by means of an energy source.

Apparatuses for additively manufacturing three-dimensional objects by successively selectively consolidating layers of a build material by means of an energy source are generally known from prior art. Such apparatuses comprise an energy source for consolidating the build material, for example generating an energy beam, such as a laser beam or an electron beam that can be guided over a layer of build material to selectively irradiate and thereby consolidate the build material.

Further, it is known from prior art that three-dimensional objects manufactured via additive manufacturing processes may be used in various industry sectors requiring a high process quality and object quality. Thus, it is usually necessary to analyze three-dimensional objects that have been manufactured via additive manufacturing, for example via non-destructive analysis methods, to verify whether the manufactured object meets defined quality requirements, such as defined mechanical properties, in particular whether the object shows impurities or defects in the structure of the three-dimensional object. Therefore, after the additive manufacturing process is finished, the object usually has to be shipped to a plant or a site for analyzing the object and verifying whether defined quality requirements are met. This quality control procedure usually is cumbersome and time-consuming.

It is an object of the present invention to provide an apparatus for additively manufacturing three-dimensional objects, wherein the quality control is improved.

The object is inventively achieved by an apparatus according to claim 1. Advantageous embodiments of the invention are subject to the dependent claims.

The apparatus described herein is an apparatus for additively manufacturing three-dimensional objects, e.g. technical components, by means of successive selective layerwise consolidation of layers of a powdered build material ("build material") which can be consolidated by means of an energy source, e.g. an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance. Alternatively, the successive layerwise selective consolidation of build material may be performed via at least one binding material. The binding material may be applied with a corresponding application unit and, for example, irradiated with a suitable energy source, e.g. a UV light source.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

The invention is based on the idea that a determination device is provided that comprises a first determination unit and a second determination unit. The determination device may be connected with the apparatus or maybe integrated in the apparatus, for instance. It is particularly possible that the first determination unit is integrally built with the apparatus, whereas the second determination unit is an external module that can be connected with the apparatus or to which the additively built object can be provided.

The first determination unit is adapted to determine at least one first parameter of the object (that is additively built in the apparatus) during the additive manufacturing process. The second determination unit is adapted to determine at least one second parameter of the object after the additive manufacturing process is finished. Thus, the first parameter of the object is determined via the first determination unit during an additive manufacturing process, i.e. while the object is additively manufactured, whereas the at least one second parameter of the object is determined via the second determination unit after the additive manufacturing process is finished, i.e. after the object has been additively built. Subsequently, the determination device is adapted to compare the at least one first parameter and the at least one second parameter. The determination processes and the comparison may preferably be performed automatically.

Therefore, it is inventively achieved that a first determination unit that is provided for the determination of a first parameter during an additive manufacturing process can be related with a second determination unit determining a second parameter after the additive manufacturing process. Based on the comparison of the "in process" determination and the "out of process" determination, it is possible to verify whether the object meets defined quality requirements, wherein it is preferably possible to establish the first determination unit as reference via the comparison of the first parameter and the second parameter, as will be described in detail below. Advantageously, it is not necessary to ship an additively built object to a plant or a site in which the at least one second parameter is determined. Instead, the at least one second parameter may be determined via the second determination unit after the additive manufacturing process is finished. Further, by establishing the comparison of the first parameter and the second parameter, it is possible to completely rely on the first determination unit, for example for manufacturing large quantities of the same or similar objects.

It is also possible to perform an additional process step between the first determination process and the second determination process, e.g. after the additive manufacturing process is finished and before the object is brought to the second determination unit. Such a process step of the manufacturing process may for example be a heat treatment of the object. Thus, the effect of the additional process step on the object may be monitored via the second determination process. Further, an additional second determination process may be performed after the additive manufacturing process and before the additional process step.

Therefore, it is possible to additively manufacture the three-dimensional object while the first determination process is performed. After the manufacturing process is finished, a second determination process may be performed via the second determination unit. Thus, the determination result performed via the first determination unit in the first determination process during the additive manufacturing process can be verified. After the second determination process is finished, the object may be treated via an additional process step, such as a heat treatment. After the additional process step is finished, an additional second determination process may be performed via the second determination unit. Hence, it is possible to verify that the additional process step has the desired effect on the three-dimensional object. After the first determination unit has been established as reference and the effect of the additional process step is verified, the first determination unit may be exclusively used to determine the quality of the object and to predict the effect of additional process steps on the object.

According to a first embodiment of the present invention, the first determination unit may be adapted to determine the at least one first parameter based on a determination of radiation propagating in a process chamber of the apparatus and wherein the second determination unit may be adapted to determine at least one second parameter of an (additively built) object via a non-destructive technology. According to this embodiment, the at least one first parameter may be determined based on a determination of radiation propagating in a process chamber of the apparatus. The at least one first parameter may be or may comprise information relating to radiation emitted from the build plane, in particular thermal radiation and/or at least one reflected part of radiation emitted from the energy source, such as an energy beam, in particular a laser beam or an electron beam, used to irradiate build material arranged in a build plane. Hence, it is possible that the radiation propagating in the process chamber of the apparatus may be emitted via the energy source or may be emitted from the build material, such as radiation that has been emitted from the energy source and is reflected at the build plane or thermal radiation emitted from the object or the build plane due to heating of the build material via the energy source. Based on the determination of this radiation it is possible to determine the at least one first parameter that may relate to the quality of the object, e.g. the consolidation behavior or temperature gradients in the build material during the additive manufacturing process.

It is particularly possible that the first determination unit monitors the additive manufacturing process, e.g. continuously or layerwise, and therefore, is adapted to determine the at least one parameter for multiple positions in multiple (every) layers of the object, wherein irregularities in the additive manufacturing process can be observed and identified. Thereby, it is possible to store the at least one first parameter, e.g. layerwise or in a three-dimensional map relating to the object geometry. The second determination unit according to this embodiment is adapted to determine at least one second parameter of an additively built object via a non-destructive technology. Thus, after the object is built, the second determination unit may determine the at least one second parameter via non-destructive technology. The at least one a second parameter may therefore, comprise or be an image, in particular a computer tomography image (CT) and/or magnetic resonance image (MRI) and/or an ultrasonic image of the at least one part of the additively built object.

The determination device may preferably be adapted to combine and/or to compare the at least one first parameter and the at least one second parameter for at least one part of the object, in particular for a plurality of parts of the object, preferably for the entire object. Based on the determination of the at least one first parameter and the at least one second parameter a relation can be established between the two corresponding parameters, e.g. corresponding to / determined in the same position of the three-dimensional object, in particular in the same layer on the same position, e.g. in relation to the same coordinate of the layer. An object coordinate system may be defined, wherein the coordinates may define the position in which a corresponding parameter was determined, in particular comprising the layer and the position in the layer (position in the build plane). Thus, the result indicated via the at least one first parameter may be compared with the result indicated via the at least one second parameter in that a relation between both, the first and the second parameter can be established. For example, it is possible to verify, whether the first determination unit and the second determination unit deliver the same results by comparing the first parameter and the second parameter for corresponding object positions.

Further, the determination device may be adapted to determine a relation between the first parameter that is determined via the first determination unit and the second parameter that is determined via the second determination unit. The relation between the first and the second parameter indicates whether both parameters deliver the same results for corresponding positions of the object. Thus, if a direct relation between the first determination process and the second determination process, i.e. the first parameter and the second parameter, can be established, it is advantageously possible to rely on the determination of the at least one first parameter and conclude on the object quality, i.e. verify whether the object meets defined quality requirements, based on the at least one first parameter solely, as the established relation between the at least one first parameter and the at least one second parameter can be used to use the first determination process, in particular the at least one first parameter, as reference.

Thus, it is not necessary to perform the second determination via the second determination unit for every object that is additively built on the apparatus, but after the relation is established between the first determination process and the second determination process, i.e. the at least one first parameter and the at least one second parameter, it is sufficient to determine the at least one first parameter during the additive manufacturing process. If the first parameter indicates that the quality requirements are fulfilled, the object can be deemed as qualitatively sufficient without the need for an additional second determination process. In particular regarding the manufacturing of high quantities of objects (identical or similar objects) it is beneficial to only determine the at least one first parameter and the at least one second parameter until a relation between both parameters can be established and afterwards use the at least one first parameter that is determined during the additive manufacturing process for the assessment of the object quality. The use of the at least one first parameter as reference further allows for a direct reaction during the additive manufacturing process, if the first parameter indicates an (imminent) irregularity in the object and/or process quality, whereas the second determination process being performed after the additive manufacturing process is finished does not allow a reaction, e.g. an adjustment of process parameters, as the manufacturing process is already finished. Therefore, the relation between the at least one first parameter and the at least one second parameter ensures that both parameters deliver the same result and that an assessment of object quality can be performed based on the at least one first parameter.

The inventive apparatus can further be improved in that the determination device may be adapted to determine a difference between the at least one first parameter and the at least one second parameter. Thus, it is possible that deviations in the determination of the first parameter and a corresponding second parameter can be determined. If the at least one first parameter that has been determined via the first determination unit deviates from the at least one second parameter which has been determined via the second determination unit, the occurring deviation can be identified via a comparison between the at least one first parameter and the corresponding at least one second parameter. For example, for each point or section of the object it is possible to determine differences between (the results of) the first determination performed via the first determination unit during the additive manufacturing process and the second determination performed via the second determination unit after the additive manufacturing process is finished. Preferably, it is possible to adjust the at least one first determination unit in that a determined difference can be compensated. Therefore, the first determination unit may be adjusted in that the results of both determination process are match, i.e. the at least one first parameter matches the at least one second parameter for the corresponding point or section of the object.

Preferably, the determination device may be adapted to generate a map spatially resolving the at least one first parameter and/or the at least one second parameter and/or at least one difference between the at least one first parameter and the at least one second parameter. Thus, the generated map may spatially resolve at least one first parameter determined for a position and/or a region, for example multiple positions of a layer of build material, during the additive manufacturing process. Hence, the consolidation behavior or radiation that propagated in the process chamber, e.g. was emitted from the build plane, during the additive manufacturing of the corresponding layer, can be stored in the map. Of course, it is possible to also store the at least one a second parameter in an analog manner in a map or in the same map the at least one first parameter is stored in. Afterwards, a comparison and resulting differences between the at least one first parameter and the at least one second parameter may also be spatially resolved in the map. For example, a map of the layer of the three-dimensional object may be generated displaying the at least one first parameter and/or the at least one second parameter and/or a difference between the at least one first and the at least one second parameter to a user. The user may therefore, derive from the map, whether the at least one first parameter matches the at least one second parameter or whether and where a difference between the at least one first parameter and the at least one second parameter occurs.

Further, the determination device may be adapted to generate a map for at least two different layers of the object. In other words, it is possible to generate a three-dimensional map spatially resolving the at least one first parameter and/or the at least one second parameter and/or a difference between the at least one first parameter and the at least one second parameter for multiple layers of the object, in particular for the entire object. Thus, the user may be displayed every position of the three-dimensional object and a comparison between the determined first parameter and the determined second parameter as well as whether a difference between the first and the second parameter occurs in each position or region of the three-dimensional object. Of course, after the first determination process has been established as reference, it is sufficient to merely display the at least one first parameter in the (three-dimensional) map. In this case, the at least one first parameter may directly indicate object quality, in particular regions of the objects in which irregularities were present during the additive manufacturing process.

The inventive apparatus can further be improved in that the determination device may be adapted to provide at least one built object to the second determination unit, after the additive manufacturing process is finished, wherein the second determination unit is adapted to determine the at least one second parameter, wherein the determination device is adapted to establish a relation between the first and second parameter. Thus, it is possible that after the additive manufacturing process is finished the second determination unit is provided with the at least one built object to perform the second determination process in which the at least one second parameter is determined. As the first determination unit determines the at least one first parameter during the additive manufacturing process, the determination device can establish the relation, as described before, between the at least one first and the at least one second parameter (for multiple positions or regions of the object) after the second determination process is finished. For example, after the additive manufacturing process is finished, the second determination unit (or another unit) may be adapted to move, e.g. to grab, the built object from a handling station or from a build chamber, in which the additive manufacturing process was performed, and the second determination unit (or another unit) may be adapted to perform the second determination process, e.g. a CT scan of the object. It is also possible to transport the object between the first determination unit and the second determination unit via a module of the apparatus, such as a build module that provides the build chamber in which the object is additively built. Such a build module may be separably connected or connectable with the apparatus in that after the manufacturing process is finished, the module may be separated and can move the object to the second determination unit. The object may also be transported via an automated vehicle or a robot, for instance.

The determination device may preferably be adapted to provide the at least one object with orientation means, in particular a QR code, wherein the first determination unit and/or the second determination unit are adapted to determine an orientation of the object based on the orientation means. It is beneficial to have the object arranged in the same orientation during the first determination process and the second determination process, as the at least one first parameter and the at least one second parameter can be compared for corresponding positions of the object. Thus, a direct relation between the at least one first parameter and the at least one second parameter that correspond to the same position can only be established, if the corresponding parameters are determined for the same region or the same position of the three-dimensional object. Thus, it is possible to provide the at least one object with an orientation means that can be read via the first determination unit and/or the second determination unit, for instance. It is also possible that the orientation is defined in the additive manufacturing process, in that the first determination unit does not have to be able to read the orientation means, but the three-dimensional object is provided with the orientation means in that the second determination unit may read the orientation means. Thus, it can be ensured that both, the first determination unit and the second determination unit determine the at least one first parameter and the at least one second parameter with the object having the same orientation.

Besides, it is also possible to identify the object, e.g. via the orientation means or a separate identification means, such as a QR code. Hence, it is possible for the second determination unit to identify the object, in particular to assure that the correct object is measured. For example, an identification / orientation means may be provided to the object in the additive manufacturing process, wherein the second determination unit is adapted to identify the object from a plurality of manufactured objects. Hence, it is made sure that the results from the first determination unit and the second determination unit can be related to the same object.

The determination device may further be adapted to store and/or transmit data comprising the at least one first parameter and/or the at least one second parameter, in particular the relation between the at least one first and the at least one second parameter, wherein the determination device is adapted to transmit the data to at least one other apparatus, in particular to a network of apparatuses. For example, after the relation between the first determination unit and the second determination unit, in particular the at least one first parameter and the at least one second parameter, has been established, it is possible to share the information with a defined number of apparatuses, in particular a network of apparatuses, for example in a plant. Thus, each of the apparatuses that use a first determination unit, such as an in process quality management device, can fall back on the established relation and therefore, can use the at least one first parameter determined via the first determination unit of each corresponding apparatus to verify whether additively manufactured objects suffice defined quality requirements.

Thus, after the relation between the at least one first parameter and the at least one second parameters been established, the information (specific relation and/or possible adjustments to the first determination unit) can be shared with other apparatuses and therefore, the second determination process which is required for every additively manufactured object according to prior art, can be omitted, as the necessary information can be generated based on the determination of the at least one first parameter. Thus, the first determination process can be used as reference, wherein the second determination process does not necessarily have to be performed. Advantageously, the second determination process may (randomly) be performed to verify that the first determination process still delivers the same results as the second determination process, e.g. via sampling inspection.

According to another embodiment of the inventive apparatus, the determination device may be adapted to establish the determination performed by the first determination unit as reference dependent on the determined difference between the at least one first and the at least one second parameter, wherein only first parameters are determined for the corresponding type of object or type of manufacturing process, with the first determination unit being established as reference. As already described before, it is possible that the determination device may solely determine the at least one first parameter via the first determination unit after the first determination unit has been established as reference. According to this embodiment, it is possible to determine the difference between the at least one first parameter and the at least one a second parameter, as already described before. Based on the difference, in particular if no difference between the first and the second parameters is present or an existing difference has been compensated, the first determination process that is performed by the first determination unit can be established as reference, wherein it is only necessary to determine the first parameters for the object, in particular for corresponding object types, such as identical objects or similar objects or corresponding manufacturing processes, for example processes in which the same build material or the same or similar type of object is manufactured. Thus, it is possible to establish the first determination unit as reference and subsequently use solely the first determination unit for assessing the object quality during the additive manufacturing process. Same or similar additive manufacturing processes performed on the apparatus, e.g. manufacturing processes in which a similar or identical object is manufactured or manufacturing processes with the same or similar process parameters, such as the same build material used, intensity and/or power of the energy source, writing time, scan speed, etc., may also fall back on the first determination unit performing the first determination process, wherein the second determination process can be omitted, as described before.

Further, the comparison between the at least one first parameter determined via the first determination unit, which, as described before, is preferably integrated in the additive manufacturing apparatus and the at least one second parameter determined via an (external) second determination unit can also be used to adjust and enhance parameters, in particular regarding the adjustment of the first determination unit. For example, if the difference between the at least one first parameter and the at least one second parameter is determined, the first determination unit can be adjusted accordingly. It is also possible that "machine learning" can be enhanced, as the first determination process can be improved by constantly comparing the results and the conclusions on the object quality with second determination processes. Occurring differences, e.g. for types of objects or specific process parameters can help to improve the first determination process.

Besides, the invention relates to a determination device for an apparatus for additively manufacturing three-dimensional objects, in particular an inventive apparatus, as described before, wherein the determination device comprises a first determination unit and a second determination unit, wherein the first determination unit is adapted to determine at least one first parameter of the object during an additive manufacturing process and wherein the second determination unit is adapted to determine at least one second parameter of the object after the additive manufacturing process is finished, wherein the determination device is adapted to compare the at least one first parameter and the at least one second parameter.

Further, the invention relates to a method for operating an apparatus for additively manufacturing three-dimension objects, in particular an inventive apparatus, as described before, wherein at least one first parameter of the object is determined via a first determination unit during an additive manufacturing process and wherein at least one second parameter of the object is determined via a second determination unit after the additive manufacturing process is finished, wherein the at least one first parameter and the at least one second parameter are compared via a determination device comprising the first determination unit and the second determination unit.

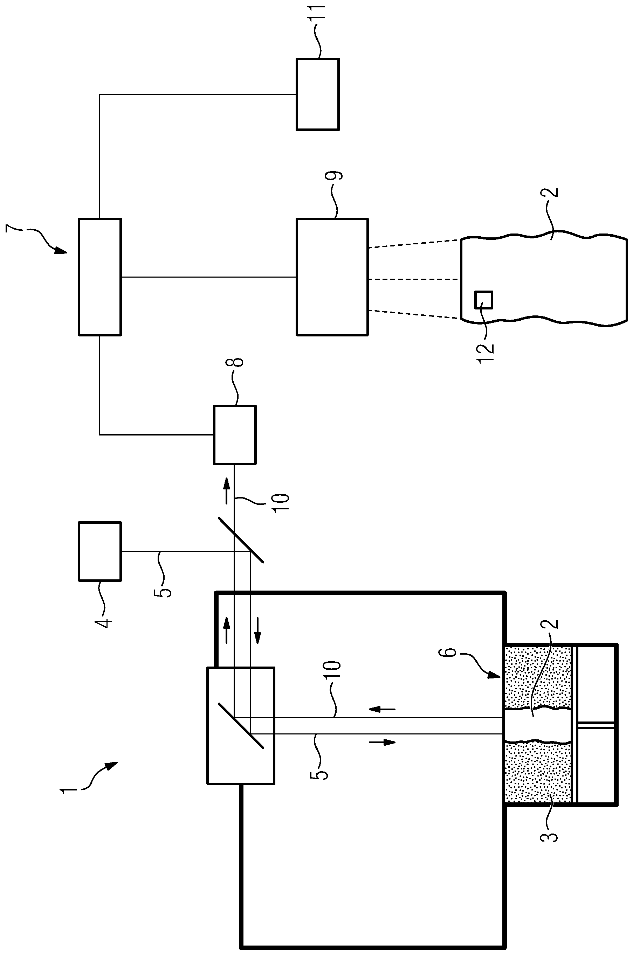

Exemplary embodiments of the invention are described with reference to the Fig. The sole Fig. is a schematic diagram showing an inventive apparatus with an inventive determination device.

The sole Fig. shows an apparatus 1 for additively manufacturing three-dimensional objects 2 by means of successive layerwise selective irradiation and consolidation of layers of a build material 3 which can be consolidated by means of an energy source 4. According to this exemplary embodiment, the energy source 4 is built as beam source, for example generating a laser beam 5 that can be guided onto a build plane 6 in which the build material 3 is arranged to be selectively irradiated.

Further, a determination device 7 is provided, which comprises a first determination unit 8 and a second determination unit 9, e.g. a non-destructive analysis unit, such as a computer tomography unit. The first determination unit 8 is adapted to determine a first parameter of the object 2 in multiple positions of the object 2, for each layer the object 2 is layerwise manufactured. The first parameter may comprise, inter alia, information relating to radiation 10 that is emitted from the different positions of the uppermost layer that is arranged and irradiated in the build plane 6, for example a reflected part of the laser beam 5 or thermal radiation emitted from (consolidated) parts of build material 3 arranged in the build plane 6. The radiation 10 is emitted from the build plane 6 and is guided to the first determination unit 8 for determining the first parameter for the different position of the individual layers of the object 2. Hence, the first determination process performed via the first determination unit 8 in which the first parameter is determined is performed during the additive manufacturing process of the object 2.

After the object 2 is additively manufactured, a second parameter can be determined via the second determination unit 9 that performs a second determination process. Both, the first determination unit 8 and the second determination unit 9 may send the first parameter and the second parameter to the determination device 7. The determination device 7 is adapted to compare the first parameter(s) and the second parameter(s), in particular for corresponding positions of the object 2 and therefore, the determination device 7 is adapted to establish a relation between the first determination process and the second determination process, in particular between each corresponding set of first parameter and second parameter for the individual positions or regions of the object 2.

Further, it is possible that the determination device 7 generates a map, in particular a three-dimensional map, in which the first parameters and the second parameters are spatially resolved, wherein it is also possible to generate a map comprising the differences between the first parameters and the second parameters for each position or region of the object 2. Hence, a relation between the first parameters and the second parameters can be established and possible differences between the first parameters and the second parameters can be compensated in that the first determination unit 8 can be adjusted accordingly. Thus, based on the adjustment, it is ensured that the first parameters determined via the first determination unit 8 deliver the same results as a second determination process performed by the second determination unit 9. Therefore, the first determination unit 8 can be used as reference for determining whether the object 2 meets defined quality requirements. Thus, it is possible to perform multiple additive manufacturing processes on the apparatus 1 using the first determination unit 8 as reference, wherein the same or similar objects 2 can be additively built or the same or similar additive manufacturing processes can be performed on the apparatus 1 with the first determination unit 8 established as reference. Therefore, a second determination process performed via the second determination unit 9 is not necessary for each object 2 additively built on the apparatus 1, as the quality monitoring can be performed solely via the first determination unit 8.

According to this exemplary embodiment depicted in the sole Fig., the determination device 7 can be connected to an interface 11 via which it is possible to share first parameters and/or the second parameters and/or the map, for example share the data with another apparatus 1 or another network of apparatuses 1. Thus, it is possible that the relation between the at least one first parameter the at least one second parameter can be shared throughout the network of apparatuses 1 to reduce the effort related with quality monitoring, in particular to omit the necessity of performing a second determination process for each additively built object 2.

Additionally, the object 2 can be provided with orientation means 12, in particular with a QR code, that allows for a determination of the orientation of the object 2, wherein for example, the second determination unit 9 is adapted to determine the orientation of the object 2 based on the orientation means 12. Thus, it can be ensured that the object 2 is arranged in the same orientation in the additive manufacturing process, where the first parameter is determined via the first determination unit 8 and in the second determination process, where the second parameter is determined by the second determination unit 9. Thus, a direct relation between the first parameter and the second parameter relating to the same position of the object 2 (for multiple positions of the object 2) can be established. The orientation means 12 can preferably be provided during the additive manufacturing process performed on the apparatus 1.

Of course, the inventive method may be performed on the inventive apparatus 1.

## Claims

1. Apparatus (1) for additively manufacturing three-dimensional objects (2) by means of successive layerwise selective irradiation and consolidation of layers of a build material (3) which can be consolidated by means of an energy source (4), **characterized by** a determination device (7) that comprises a first determination unit (8) and a second determination unit (9), wherein the first determination unit (8) is adapted to determine at least one first parameter of the object (2) during an additive manufacturing process and wherein the second determination unit (9) is adapted to determine at least one second parameter of the object (2) after the additive manufacturing process is finished, wherein the determination device (7) is adapted to compare the at least one first parameter and the at least one second parameter.

2. Apparatus according to claim 1, **characterized in that** the first determination unit (8) is adapted to determine the at least one first parameter based on a determination of radiation propagating in a process chamber of the apparatus (1) and wherein the second determination unit (9) is adapted to determine at least one second parameter via a non-destructive technology.

3. Apparatus according to one of the preceding claims, **characterized in that** the at least one first parameter is or comprises information relating to radiation emitted from a build plane (6), in particular thermal radiation and/or at least one reflected part of radiation emitted from the energy source (4) used to irradiate build material (3) arranged in the build plane (6).

4. Apparatus according to one of the preceding claims, **characterized in that** the at least one second parameter is or comprises an image, in particular a CT- and/or MRI- and/or ultrasonic image, of the at least one part of the additively built object (2).

5. Apparatus according to one of the preceding claims, **characterized in that** the determination device (7) is adapted to combine and/or to compare the at least one first parameter and the at least one second parameter for at least one part of the object (2), in particular for a plurality of parts of the object (2), preferably the entire object (2).

6. Apparatus according to one of the preceding claims, **characterized in that** the determination device (7) is adapted to determine a difference between the at least one first parameter and the at least one second parameter.

7. Apparatus according to one of the preceding claims, **characterized in that** the determination device (7) is adapted to adjust the at least one first determination unit (8) **in that** a determined difference is compensated.

8. Apparatus according to one of the preceding claims, **characterized in that** the determination device (7) is adapted to generate a map spatially resolving the at least one first parameter and/or the at least one second parameter and/or at least one difference between the at least one first parameter and the at least one second parameter.

9. Apparatus according to one of the preceding claims, **characterized in that** the determination device (7) is adapted to generate the map for at least two different layers of the object (2).

10. Apparatus according to one of the preceding claims, **characterized in that** the determination device (7) is adapted to provide at least one built object (2) to the second determination unit (9), after the additive manufacturing process is finished, wherein the second determination unit (9) is adapted to determine the at least one second parameter, wherein the determination device (7) is adapted to establish a relation between the first and second parameter.

11. Apparatus according to one of the preceding claims, **characterized in that** the determination device (7) is adapted to provide the at least one object (2) with orientation means (12), in particular a QR code, wherein the first determination unit (8) and/or the second determination unit (9) are adapted to determine an orientation of the object (2) based on the orientation means (12).

12. Apparatus according to one of the preceding claims, **characterized in that** the determination device (7) is adapted to store and/or transmit data comprising the at least one first parameter and/or the at least one second parameter, in particular the relation between the at least one first and the at least one second parameter, wherein the determination device (7) is adapted to transmit the data to at least one other apparatus (1), in particular to a network of apparatuses (1).

13. Apparatus according to one of the preceding claims, **characterized in that** the determination device (7) is adapted to establish the determination performed via the first determination unit (8) as reference dependent on the determined difference, wherein only the first parameter is determined for the corresponding type of object (2) or manufacturing process, with the first determination unit (8) being established as reference.

14. Determination device (7) for an apparatus (1) for additively manufacturing three-dimensional objects (2), in particular an apparatus (1) according to one of the preceding claims, **characterized in that** the determination device (7) comprises a first determination unit (8) and a second determination unit (9), wherein the first determination unit (8) is adapted to determine at least one first parameter of the object (2) during an additive manufacturing process and wherein the second determination unit (9) is adapted to determine at least one second parameter of the object (2) after the additive manufacturing process is finished, wherein the determination device (7) is adapted to compare the at least one first parameter and the at least one second parameter.

15. Method for operating an apparatus (1) for additively manufacturing three-dimension objects (2), in particular an apparatus (1) according to one of the claims 1 to 13, **characterized in that** at least one first parameter of the object (2) is determined via a first determination unit (8) during an additive manufacturing process and wherein at least one second parameter of the object (2) is determined via a second determination unit (9) after the additive manufacturing process is finished, wherein the at least one first parameter and the at least one second parameter are compared via a determination device (7) comprising the first determination unit (8) and the second determination unit (9).
